# EUROPEAN PATENT APPLICATION

(11) **EP 4 276 221 A1**
(43) Date of publication of application: **15.11.2023**
(21) Application number: 22172676.3
(22) Date of filing: 11.05.2022
(51) Int. Cl.: C25B 1/04, C25B 15/00, C25B 15/023, F03D 9/19, F04C 18/00

(54) **HYDROGEN PRODUCTION APPARATUS FOR A WIND TURBINE, WIND TURBINE ARRANGEMENT AND METHOD FOR OPERATING A HYDROGEN PRODUCTION APPARATUS FOR A WIND TURBINE**

(71) Applicant: Siemens Gamesa Renewable Energy A/S, 7330 Brande (DK)
(72) Inventor: Hellstern, Henrik Christian Lund, 8210 Aarhus V (DK); Madsen, Finn Daugaard, 7190 Billund (DK)
(74) Representative: SGRE-Association

(57) **Abstract**

A hydrogen production apparatus (11) for a wind turbine (2), comprising:
an electrolytic hydrogen production unit (18) for producing hydrogen gas (12) from electrical energy generated by the wind turbine (2),
a compressor unit (19) for compressing the produced hydrogen gas (12), and
a sensor unit (20) fluidly connected to the compressor unit (19) for detecting an oil contamination (H) of the compressed hydrogen gas (12).

Thus, an oil contamination of the hydrogen gas produced by the hydrogen production apparatus can be continuously monitored. Further, an oil contamination of the hydrogen gas can be detected before the hydrogen gas is discharged by the hydrogen production apparatus.

## Description

The present invention relates to a hydrogen production apparatus for a wind turbine, a wind turbine arrangement with such a hydrogen production apparatus and a method for operating a hydrogen production apparatus for a wind turbine.

Hydrogen gas produced from renewable energies such as wind power provides a green hydrogen that can be used in hydrogen fuel cells and replace fossil fuels. For example, green hydrogen gas can be used in fuel cell vehicles. For use in hydrogen fuel cells, the hydrogen fuel quality has to comply with international specifications with respect to impurities of the gas (e.g., ISO 14678). In particular, oil contaminants of the hydrogen gas can affect the fuel cell catalyst, the fuel cell power system and other components of the fuel cell. Therefore, it is necessary to analyze the produced hydrogen for impurities to comply with regulations and to avoid damage of fuel cells of end users. Further, in recent years, PEM (proton exchange membrane) fuel cell technologies have shown a remarkable progress such as lowering of platinum loading, thinned electrolyte membrane, operation with high current density and operation under low humidity. This has led to a recent refinement of the tolerances of hydrogen impurities in the international standard ISO 14678.

It is one object of the present invention to provide an improved hydrogen production apparatus for a wind turbine.

Accordingly, a hydrogen production apparatus for a wind turbine is provided. The hydrogen production apparatus comprises :
an electrolytic hydrogen production unit for producing hydrogen gas from electrical energy generated by the wind turbine,
a compressor unit for compressing the produced hydrogen gas, and
a sensor unit fluidly connected to the compressor unit for detecting an oil contamination of the compressed hydrogen gas.

With the sensor unit of the hydrogen production apparatus an oil contamination of the hydrogen gas produced by the hydrogen production apparatus can be readily detected. For example, an oil contamination of the hydrogen gas can be continuously monitored. Further, an oil contamination of the hydrogen gas can, for example, be detected before the hydrogen gas is discharged by the hydrogen production apparatus.

In particular, an oil contamination caused by the compressor unit of the hydrogen production apparatus can be detected. The compressor unit compresses the hydrogen gas for a more efficient transportation of the gas. Oil contaminants such as lubricants and hydraulic fluid can be introduced by the compressor unit into the compressed hydrogen gas. For example, hydraulic oil from a piston compressor can leak into the hydrogen gas. With the sensor unit arranged downstream of the compressor unit, contaminations caused by the compressor unit can be revealed.

The wind turbine is an apparatus to convert the wind's kinetic energy into electrical energy. The wind turbine comprises, for example, a rotor having one or more blades connected each to a hub, a nacelle including a generator, and a tower holding, at its top end, the nacelle. The tower of the wind turbine may be connected via a transition piece to a foundation of the wind turbine, such as a concrete foundation or a monopile in the seabed.

The wind turbine is, for example, an onshore wind turbine. The wind turbine may, however, also be an offshore wind turbine. Offshore includes marine environments as well as lakes and other open waters.

In the case of an onshore wind turbine, the hydrogen production apparatus including the electrolytic hydrogen production unit, the compressor unit and the sensor unit is, for example, arranged, on the ground next to the wind turbine. The hydrogen production apparatus is, for example, arranged within a distance of 1000 meters or less, of 500 meters or less, 200 meters or less, 100 meters or less and/or 50 meters or less from the foundation of the wind turbine. In addition or instead, for safety reasons, the hydrogen production apparatus is, for example, arranged within a distance of at least 200 meters, at least 300 meters and/or at least 500 meters from the foundation of the wind turbine.

In the case of an offshore wind turbine, the hydrogen production apparatus including the electrolytic hydrogen production unit, the compressor unit and the sensor unit is, for example, arranged, on an outside platform of the tower of the wind turbine.

The electrolytic hydrogen production unit converts, for example, water into hydrogen gas by using the electrical current produced by the generator of the wind turbine. Thereby, water is separated into hydrogen and oxygen by an electrolysis process in the hydrogen production unit.

The hydrogen gas produced by the hydrogen production unit has, for example, a pressure of 100 bar or smaller, 50 bar or smaller and/or 30 bar or smaller. The compressor unit compresses the produced hydrogen gas, for example, to a pressure of 100 bar or larger, 200 bar or larger, 300 bar or larger and/or 400 bar or larger. The hydrogen gas is compressed by the compressor unit by reducing its volume. Compressing the gas allows transportation of a larger volume of gas per time and, thus, a more efficient and faster transportation of the gas. The compressed gas is, for example, transported by means of pressure vessels on a road such as tube trailers. The compressed gas may also be transported, for example, by means of gas pipes.

The compressor unit is, for example, configured for being fluidly connected with a discharge unit of the hydrogen production apparatus. The discharge unit may, for example, be used to feed a dispenser or a transportation pipe.

The hydrogen gas produced by the hydrogen production apparatus is, for example, used in a fuel cell and/or a fuel cell system such as a fuel cell vehicle or a fuel cell power system (stationary fuel cell used for the generation of electricity) .

A fuel cell is an electrochemical device that converts the chemical energy of a fuel (e.g., hydrogen gas) and an oxidant to electrical energy (DC power), heat or other reaction products.

An oil contaminant is an impurity that can adversely affect components of a fuel cell system, a fuel cell vehicle, a fuel cell power system and/or a hydrogen storage system. An adverse effect may include a reversible or an irreversible effect.

The sensor unit includes, in particular, a quality sensor for determining a quality such as a purity of the hydrogen gas. The sensor unit is, for example, configured for detecting oil contaminants and/or hydrocarbons in the compressed hydrogen gas. The sensor unit is, for example, configured for sampling hydrogen gas for analysis downstream of the compressor unit.

The hydrogen production apparatus comprises, for example, a connecting pipe fluidly connecting the hydrogen production unit and the compressor unit for transporting the gas produced by electrolysis in the hydrogen production unit to the compressor unit. Further, the hydrogen production apparatus comprises, for example, a further connecting pipe fluidly connecting the compressor unit to the sensor unit and to a discharge unit. Said pipes are, in particular, gas pipes (e.g., gas-tight pipes).

According to an embodiment, the hydrogen production apparatus is configured for simultaneously compressing the produced hydrogen gas by the compressor unit and detecting an oil contamination of the compressed hydrogen gas by the sensor unit.

Thus, an oil contamination of the compressed hydrogen gas caused by the compressor unit can be detected immediately after its occurrence.

According to a further embodiment, the hydrogen production apparatus comprises a discharge unit fluidly connected with the compressor unit for discharging the compressed hydrogen gas, wherein a gas sampling point of the sensor unit is arranged between the compressor unit and the discharge unit with respect to a downstream direction of the hydrogen gas.

Thus, an oil contamination of the compressed hydrogen gas can be detected, with respect to the downstream direction of the hydrogen gas, between the compressor unit and the discharge unit. Thus, in case of an oil contamination of the compressed hydrogen gas, this can be detected before discharging the contaminated hydrogen gas. The discharge unit is, in particular, arranged downstream of the compressor unit.

According to a further embodiment, the hydrogen production apparatus comprises a connecting pipe fluidly connecting the compressor unit and the discharge unit, the connecting pipe including a branching portion for providing the sampling point of the sensor unit.

The branching portion is, for example, a T-shaped pipe portion. A T-shaped pipe portion includes pipe portions with a 90° branch, a 45° branch or a branch having another angle. The branching portion comprise, for example, an inlet fluidly connected with the compressor unit, a first outlet (main outlet) fluidly connected with the discharge unit and a second outlet (branching outlet) fluidly connected with the sensor unit.

According to a further embodiment, the compressor unit comprises a positive displacement compressor, a piston compressor, a rotating compressor and/or a helical screw rotating compressor.

In a positive displacement compressor, a certain inlet volume of the produced hydrogen gas is confined in a given space and subsequently compressed by reducing this confined volume or space such that its pressure increases. The compressed gas is then discharged from the compressor unit.

According to a further embodiment, the sensor unit comprises a flame ionization detector, a gas chromatographer and/or a mass spectrometer.

A flame ionization detector measures analytes in a gas stream.

The operation of the flame ionization detector is based on the detection of ions formed during combustion of organic compounds in a hydrogen flame. The generation of these ions is proportional to the concentration of organic species in the sample gas stream.

According to a further embodiment, the sensor unit is configured for detecting an oil contamination of the compressed hydrogen gas by measuring an amount of oil, in particular an amount of hydrocarbons, in the compressed hydrogen gas.

The sensor unit may be configured for measuring a total amount of hydrocarbons present in the hydrogen gas. Hydrocarbons include, for example, aromatic hydrocarbons, alkanes etc. While methane is also a hydrocarbon, methane is not a result of electrolysis of water. Hence, it is not required that the sensor unit is capable of distinguishing methane from other hydrocarbons. However, the sensor unit may also be configured for detecting a total amount of hydrocarbons except methane.

The amount of oil and/or of hydrocarbons is, for example, measured in mole which is the SI base unit of the amount of a substance. The amount of hydrocarbons is, for example, measured in pmol hydrocarbons per mol hydrogen gas (i.e., in parts per million hydrocarbons, ppmv).

According to a further embodiment, the hydrogen production apparatus comprises a control unit configured for detecting an oil contamination of the compressed hydrogen gas by comparing an amount of oil measured by the sensor unit in the compressed hydrogen gas with a predetermined threshold value.

The control unit receives, for example, measurement data (measurement results) of the sensor unit and processes the measurement data. The control unit comprises, for example, a storage for storing the predetermined threshold value.

The control unit determines, for example, that an oil contamination is present when the amount of oil - in particular the amount of hydrocarbons (e.g., hydrocarbons except methane) - measured in the hydrogen gas exceeds the predetermined threshold value.

The predetermined threshold value for the amount of total hydrocarbons (e.g., except methane) is, for example, 10 pmol/mol, 5 pmol/mol, 4 pmol/mol, 3 pmol/mol, 2 pmol/mol, 1 µmol/mol and/or 0.5 µmol/mol. Thereby, 1 µmol/mol is equal to 1 ppmv (parts per million). Hence, the control unit determines, for example, that an oil contamination is present when the amount of total hydrocarbons or the amount of total hydrocarbons except methane exceeds 10 µmol/mol, 5 µmol/mol, 4 µmol/mol, 3 µmol/mol, 2 µmol/mol, 1 µmol/mol and/or 0.5 µmol/mol.

The control unit determines, for example, that an oil contamination is present when the amount of oil measured in the hydrogen gas does not comply with current regulations for hydrogen gas quality and/or hydrogen fuel quality. An example for such regulations is the specifications set by the international standard ISO 14687 on "Hydrogen fuel quality" (ISO 14687:2019, Hydrogen fuel quality - Product specification, International Organization for Standardization, https://www.iso.org/standard/69539.html; henceforth: ISO 14687).

For example, according to said standard ISO 14687, the threshold for the total amount of hydrocarbons except methane for a grade D hydrogen gas (applicable to gaseous hydrogen and/or PEM fuel cells for road vehicles) is 2 µmol/mol.

The control unit may be part of a main control device of the hydrogen production apparatus or may be a separate entity.

According to a further embodiment, the hydrogen production apparatus comprises a control unit configured for:
determining one or more characteristic parameters of a temporal development of an amount of oil in the compressed hydrogen gas measured over a predetermined time span, wherein the characteristic parameters include a minimum value, a maximum value, a mean value, a median value and/or a mode value, and
comparing one, some or all of the determined characteristic parameters with a predetermined threshold value.

Analyzing the temporal development of the amount of oil (e.g., the amount of hydrocarbons) in the hydrogen gas allows a higher accuracy of the detection of an oil contamination. The reason is that by repeated measurements over time, the influence of outliers and measurement uncertainties (measurement noise) on the final measurement result can be reduced.

Comparing one, some or all of the determined characteristic parameters with the predetermined threshold value means, in particular, that a determined minimum value, a determined maximum value, a determined mean value, a determined median value and/or a determined mode value of the amount of hydrocarbons is compared with the predetermined threshold value.

In embodiments, also other parameters with respect to a temporal development of an amount of oil in the compressed hydrogen may be determined such as a time passed since a last impurity warning, a time passed since a last sampling for laboratory analysis and/or a status of the sensor unit.

According to a further embodiment, the hydrogen production apparatus comprises a control unit for controlling a discharge of the compressed hydrogen gas from the hydrogen production apparatus depending on a detected oil contamination of the compressed hydrogen gas and/or a measured amount of oil in the compressed hydrogen gas.

Thus, the discharge of the hydrogen gas from the hydrogen production apparatus can be controlled, for example, stopped, when an oil contamination is detected.

According to a further embodiment, the control unit is configured for controlling the hydrogen production unit, the compressor unit and/or the discharge unit.

For example, the control unit may control the hydrogen production unit such that it stops producing hydrogen gas. Further, the control unit may control the compressor unit such that it stops compressing the produced hydrogen gas. Further, the control unit may control the discharge unit such that it stops discharging the compressed hydrogen gas.

Moreover, the hydrogen production apparatus may comprise one or more valves arranged at pipes of the hydrogen production apparatus to regulate the flow of hydrogen gas. In this case, the control unit may be configured to control the one or more valves such that one or more of the valves are closed.

According to a further embodiment, the control unit is configured for controlling a discharge of the compressed hydrogen gas from the hydrogen production apparatus such that the discharge is stopped when the amount of oil measured by the sensor unit in the compressed hydrogen gas is larger than the predetermined threshold value, and/or when one, some or all of the determined characteristic parameters is/are larger than the predetermined threshold value.

Thus, a discharge of hydrogen gas by the hydrogen production apparatus is stopped in the case of a recorded impurity exceeding the threshold value.

According to a further embodiment, the hydrogen production apparatus comprises an HMI unit. Further, the control unit is configured to control the HMI unit to output:
the measured amount of oil in the compressed hydrogen gas,
one, some or all of the determined characteristic parameters, and/or
a warning message when the amount of oil detected by the sensor unit in the compressed hydrogen gas is larger than the predetermined threshold value, and/or when one, some or all of the determined characteristic parameters is/are larger than the predetermined threshold value.

An HMI unit is a human machine interface such as a display unit or a loudspeaker.

According to a further aspect, a wind turbine arrangement is provided. The wind turbine arrangement comprises a wind turbine and the above-described hydrogen production apparatus.

In embodiments of the wind turbine arrangement, the wind turbine comprises the hydrogen production apparatus.

According to a further embodiment, a method for operating a hydrogen production apparatus for a wind turbine is provided. The method comprises the steps:
a) producing hydrogen gas by electrolysis from electrical energy generated by the wind turbine,
b) compressing the produced hydrogen gas by a compressor unit, and
c) detecting an oil contamination of the compressed hydrogen gas by a sensor unit fluidly connected to the compressor unit.

In embodiments of the method, steps b) and c) are carried out simultaneously.

The control unit and the main control unit describe above and/or below may be implemented in hardware and/or in software. If the respective unit is implemented in hardware, it may be embodied as a device, e.g., as a computer or as a processor or as a part of a system, e.g. a computer system. If the respective unit is implemented in software, it may be embodied as a computer program product, as a function, as a routine, as a program code or as an executable object.

The embodiments and features described with reference to the hydrogen production apparatus of the present invention apply mutatis mutandis to the wind turbine arrangement and the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine arrangement according to a first embodiment;
Fig. 2 shows a wind turbine arrangement according to a second embodiment;
Fig. 3 shows a schematic view of a hydrogen production apparatus of the wind turbine of Fig. 1 or 2;
Fig. 4 shows measurement data measured by a sensor unit of the hydrogen production apparatus of Fig. 3, the measurement data reflecting an oil contamination of hydrogen gas produced by the hydrogen production apparatus; and
Fig. 5 shows a flowchart illustrating a method for operating a hydrogen production apparatus of the wind turbine of Fig. 1 or 2, according to an embodiment.

In the Figures, like reference numerals designate like or functionally equivalent elements, unless otherwise indicated.

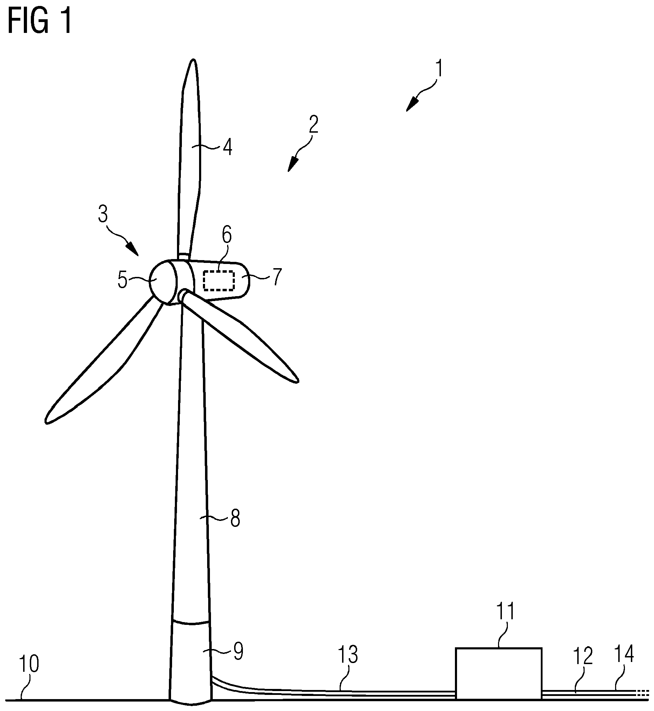

Fig. 1 shows a wind turbine arrangement 1 according to a first embodiment. The wind turbine arrangement 1 is an onshore wind turbine arrangement comprising a wind turbine 2. The wind turbine 2 comprises a rotor 3 having one or more blades 4 connected to a hub 5. The hub 5 is connected to a generator 6 arranged inside a nacelle 7. During operation of the wind turbine 2, the blades 4 are driven by wind to rotate and the wind's kinetic energy is converted into electrical energy by the generator 6 in the nacelle 7. The nacelle 7 is arranged at the upper end of a tower 8 of the wind turbine 2. The tower 8 is erected on a foundation 9 such as a concrete foundation. The foundation 9 is anchored in the ground 10.

The wind turbine arrangement 1 further comprises a hydrogen production apparatus 11 for converting the electrical energy generated by the generator 6 into hydrogen gas 12.

Further, the wind turbine arrangement 1 comprises, for example, an electrical cable 13 for transporting electrical current generated by the generator 6 of the wind turbine 2 to the hydrogen production apparatus 11. Furthermore, the wind turbine arrangement 1 comprises, for example, a gas pipe 14 for transporting the produced hydrogen gas 12 from the hydrogen production apparatus 11 to another onshore installation (not shown).

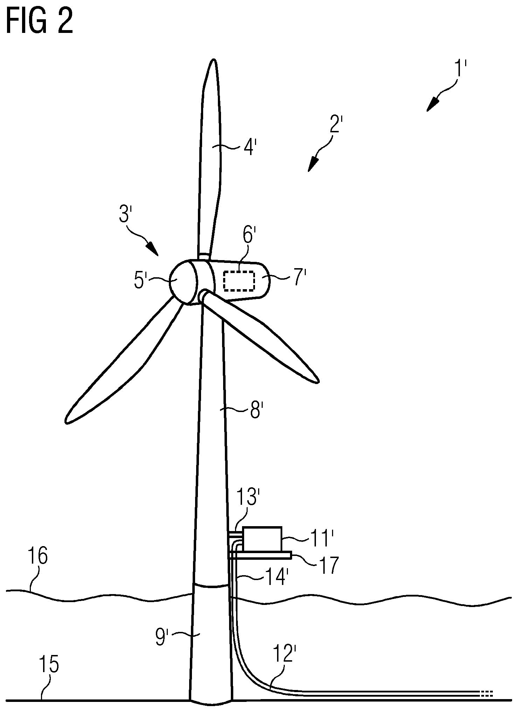

Fig. 2 shows a wind turbine arrangement 1' according to a second embodiment. The wind turbine arrangement 1' is an offshore wind turbine arrangement comprising a wind turbine 2'. Similar as the wind turbine 2 of Fig. 1, the wind turbine 2' comprises a rotor 3' having one or more blades 4' connected to a hub 5'. The hub 5' is connected to a generator 6' arranged inside a nacelle 7'. The nacelle 7' is arranged at the upper end of a tower 8' of the wind turbine 2'. The tower 8' is erected on a foundation 9' such as a monopile driven into the seabed 15. The reference sign 16 denotes a sea level.

The offshore wind turbine arrangement 1' also comprises a hydrogen production apparatus 11' for converting electrical energy generated by the generator 6' into hydrogen gas 12'. The hydrogen production apparatus 11' of the offshore wind turbine 2' is, for example, arranged on an outside platform 17 of the tower 8'.

Further, the wind turbine arrangement 1' comprises an electrical cable 13' (only partly shown in the figures) for transporting electrical current generated by the generator 6' to the hydrogen production apparatus 11'. Furthermore, the wind turbine arrangement 1 comprises, for example, a gas pipe 14' for transporting the produced hydrogen gas 12' from the hydrogen production apparatus 11' to another offshore or an onshore installation (not shown).

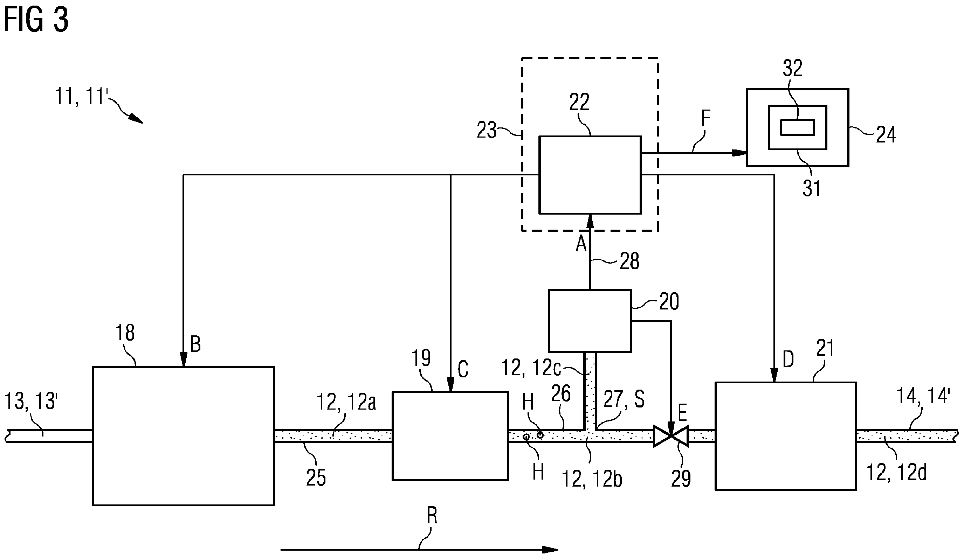

Fig. 3 shows a schematic view of the hydrogen production apparatus 11, 11' of the wind turbine arrangement 1 of Fig. 1 or of the wind turbine arrangement 1' of Fig. 2.

The hydrogen production apparatus 11, 11' comprises an electrolytic hydrogen production unit 18 for converting the electrical energy generated by the generator 6, 6' and water into hydrogen gas 12 (12a) by electrolysis.

The hydrogen production apparatus 11, 11' further comprises a compressor unit 19 for compressing the produced hydrogen gas 12 (12a). The compressor unit 19 includes, for example, a hydraulically driven piston (not shown) for decreasing the volume of the incoming hydrogen gas 12 (12a). Hydraulic oil H of the compressor unit 19 may leak into the hydrogen gas 12 (12b) during compression and may, thus, contaminate the hydrogen gas 12 (12b). In Fig. 3, an oil contamination H is schematically drawn in an exaggerated way for illustration purposes only.

In order to detect an oil contamination H of the compressed hydrogen gas 12 (12b), the hydrogen production apparatus 11, 11' comprises a sensor unit 20. The sensor unit 20 is fluidly connected to the compressor unit 19 for sampling hydrogen gas 12 (12b) discharged from the compressor unit 19.

Furthermore, the hydrogen production apparatus 11, 11' comprises a discharge unit 21 fluidly connected with the compressor unit 19 for discharging the compressed hydrogen gas 12 to a transportation pipe 14, 14' or via a dispenser to an off-taker (not shown).

The hydrogen production apparatus 11, 11' further comprises a control unit 22 configured for detecting an oil contamination H of the compressed hydrogen gas 12 (12b) and for controlling a discharge of the hydrogen gas 12 from the hydrogen production apparatus 11, 11' depending on the detected oil contamination H.

As indicated with dashed lines in Fig. 3, the hydrogen production apparatus 11, 11' may in addition comprise a main control device 23. In this case, the control unit 22 may be part of the main control device 23 or may be separate from the main control device 23 and connected to the main control device 23 for data transfer.

As shown in Fig. 3, the hydrogen production apparatus 11, 11' may further comprise an HMI unit (human machine interface unit) 24 for outputting, for example, an amount M of oil H measured by the sensor unit 20 in the compressed hydrogen gas 12 (12b). The HMI unit 24 includes, for example, a display 31 of a computer, notebook, tablet and/or smart phone. The HMI unit 24 may also include a loudspeaker (not shown).

During operation of the hydrogen production apparatus 11, 11', the hydrogen production unit 18 is receiving - for example through the electrical 13 (Fig. 1) or 13' (Fig. 2) - an electrical current from the generator 6, 6' of the wind turbine 2, 2'. The hydrogen production unit 18 is further receiving water (not shown). The hydrogen production unit 18 comprises an electrolysis equipment (not shown) for producing hydrogen gas 12 (12a) from water by using the electrical current. The hydrogen gas 12 (12a) produced by the hydrogen production unit 18 has, for example, a pressure of 30 bar.

The hydrogen production unit 18 is fluidly connected with the compressor unit 19 by means of a connecting gas pipe 25 for delivering the produced hydrogen gas 12 (12a) to the compressor unit 19. The compressor unit 19 compresses the hydrogen gas 12 (12a) for example to a pressure of 100 to 200 bar. The compressor unit 19 is fluidly connected with the discharge unit 21 by means of a further connecting gas pipe 26 for delivering the compressed hydrogen gas 12 (12b) to the discharge unit 21. A downstream direction of the hydrogen gas 12 (12a, 12b) from the hydrogen production unit 18 via the compressor unit 19 to the discharge unit 21 is denoted with the reference sign R.

The further connecting gas pipe 26 includes a branching portion 27 such as a T-shaped pipe portion. The branching portion 27 is configured for branching off a portion 12c of the compressed hydrogen gas 12 (12b) towards the sensor unit 20. The branching portion 27 provides a sampling point S of the sensor unit 20 for sampling a portion 12c of the compressed hydrogen gas 12 (12b) for analysis. The gas sampling point S of the sensor unit 20 is, in particular, arranged between the compressor unit 19 and the discharge unit 21 with respect to the downstream direction R of the hydrogen gas 12.

Thus, an oil contamination H of the compressed hydrogen gas 12 (12b) can be detected, with respect to the downstream direction R of the hydrogen gas 12, between the compressor unit 19 and the discharge unit 21. Hence, an oil contamination H of the hydrogen gas 12 caused by the compressor unit 19 can be detected before discharging the contaminated hydrogen gas 12 by the discharge unit 21. The discharge unit 21 comprises, for example, a connection to a transportation pipe 14, 14' (Figs. 1, 2) and/or a dispenser unit for offtake of the hydrogen gas 12.

The sensor unit 20 comprises, for example, a flame ionization detector, a gas chromatographer and/or a mass spectrometer. The sensor unit 20 is, in particular, configured for detecting an oil contamination H of the compressed hydrogen gas 12 (12b) by measuring an amount of oil, in particular an amount of hydrocarbons, in the compressed hydrogen gas 12 (12b). A measurement result A (measurement data A) is transferred to the control unit 22 for example by a data wire 28 (Fig. 3) or wireless.

The control unit 22 is configured for detecting an oil contamination H of the compressed hydrogen gas 12 (12b) by comparing the measurement result A of the sensor unit 20, in particular the measured amount M of oil H and/or hydrocarbons H, with a predetermined threshold value T.

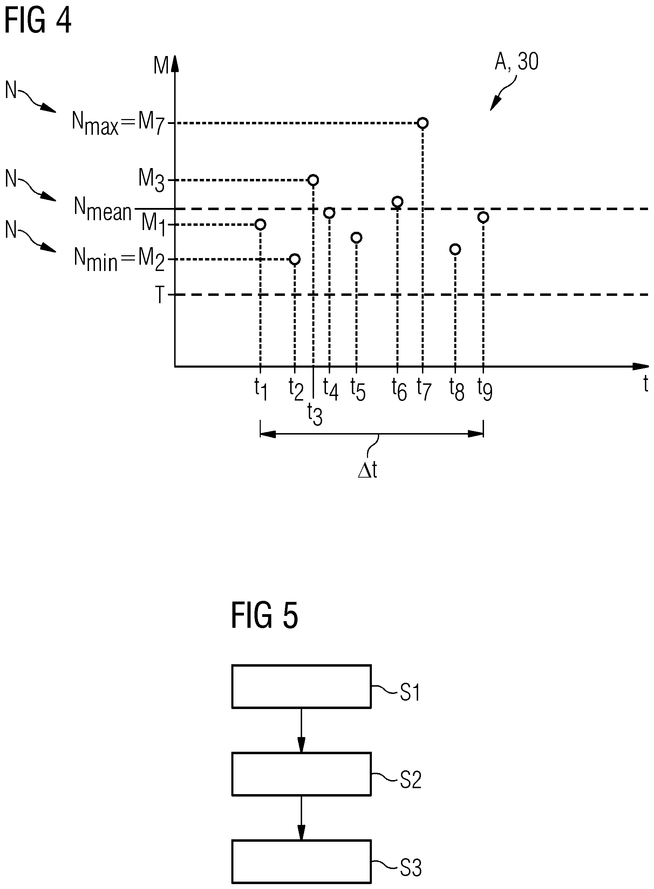

Fig. 4 shows an example of measurement data A measured by the sensor unit 20. Displayed in this figure is a temporal development 30 of an amount M of oil H in the compressed hydrogen gas 12 (12b) measured over a predetermined time span Δt.

The measurement data A may include a single measurement point such as the amount M₁ of hydrocarbons at a single time t₁. However, preferably, the measurement data A include multiple measurement points of the amount M₁ - M₇ of hydrocarbons at various times t₁ - t₇ over a time span Δt, as shown in Fig. 4. For illustration purposes, only measurement points M₁, M₂, M₃, M₇ have been denoted with a reference sign in Fig. 4.

The control unit 22 may perform various analysis procedures based on the received measurement data A. For example, when the measurement data A comprises the temporal development 30 of the amount M of oil H in the compressed hydrogen gas 12 (12b), the control unit 22 may be configured to determine one or more characteristic parameters N of the temporal development 30 such as a minimum value Nₘᵢₙ, a maximum value Nₘₐₓ, a mean value Nₘₑₐₙ, a median value and/or a mode value.

In the example shown in Fig. 4, the measured amount M₁ - M₇ of hydrocarbons in the gas 12 are above the predetermined threshold T for each measurement point M₁ - M₇. Further, also the minimum value Nₘᵢₙ, the maximum value Nₘₐₓ and the mean value Nₘₑₐₙ are each above the predetermined threshold T (e.g., 2 µmol/mol). Hence, this is an example of a clear-cut detection of an oil contamination H of the hydrogen gas 12.

The control unit 22 is configured for controlling a discharge of the compressed hydrogen gas 12 (12b) from the hydrogen production apparatus 11, 11' depending on a detected oil contamination H of the compressed hydrogen gas 12 (12b) and/or a measured amount M of oil H in the compressed hydrogen gas 12 (12b). In particular, the discharge of hydrogen gas 12 (12d) from the hydrogen production apparatus 11, 11' can be stopped, when the amount M of oil measured by the sensor unit 20 in the compressed hydrogen gas 12 (12b) is larger than the predetermined threshold value T.

For example, the control unit 22 may control the hydrogen production unit 18 by sending (wireless or wired) control data B to the hydrogen production unit 18 for stopping the production of hydrogen gas 12 (12a). Further, the control unit 22 may control the compressor unit 19 by sending (wireless or wired) control data C to the compressor unit 19 for stopping the compression of hydrogen gas 12 (12a). Further, the control unit 22 may control the discharge unit 21 by sending (wireless or wired) control data D to the discharge unit 21 for stopping the discharge of compressed hydrogen gas 12 (12b) .

The hydrogen production apparatus 11, 11' may also comprise one or more valves 29 arranged at pipes 25, 26 of the hydrogen production apparatus 11, 11' to regulate the flow of hydrogen gas 12 (12a, 12b, 12c). Further, the control unit 22 may be configured to control the one or more valves 29 by sending (wireless or wired) control data E to the respective valve 29 such that the respective valve 29 is closed for disrupting the flow of hydrogen gas 12.

The control unit 22 may also control the HMI unit 24 by sending (wireless or wired) control data F to the HMI unit 24 for outputting information on the display 32 of the HMI unit 31. For example, the measurement data A, a measured amount M of oil H in the compressed hydrogen gas 12 (12b), and/or other parameters N, Nₘᵢₙ, Nₘₐₓ, Nₘₑₐₙ derived based on the measurement data A may be output by the HMI unit 31. In addition, the control unit 22 may also instruct the HMI unit 24 to output a warning message 32 on the display 31 when the amount M of oil H detected by the sensor unit 20 in the compressed hydrogen gas 12 (12b) is larger than the predetermined threshold value T.

Based on the measurement data A obtained by the sensor unit 20 and the analysis performed by the control unit 22, a stakeholder including an off-taker of the hydrogen gas 12 can, for example, be notified in the event of a high impurity detection. This has the advantage that the off-taker can quickly adjust the logistics of, for example a tube trailer fleet to optimize hydrogen transport. The off-taker may then also assess the risk of oil contaminants in previous shipments of hydrogen gas and evaluate the need for an extended analysis at a laboratory.

Further, based on the measurement data A obtained by the sensor unit 20 and the analysis performed by the control unit 22, a certification of gas quality can be issued for an off-taker or another stakeholder.

Moreover, based on the measurement data A obtained by the sensor unit 20 and the analysis performed by the control unit 22, the production of hydrogen gas 12 by the electrolytic hydrogen production unit 18 could be controlled, for example scaled down.

In the following, a method for operating a hydrogen production apparatus 11, 11' for a wind turbine 2, 2' is described with reference to Fig. 5.

In a first step S1 of the method, a hydrogen gas 12 (12a) is produced by electrolysis from electrical energy generated by the wind turbine 2, 2'.

In a second step S2 of the method, the produced hydrogen gas 12 (12a) is compressed by a compressor unit 19.

In a third step S3 of the method, an oil contamination H of the compressed hydrogen gas 12 (12b) is detected by a sensor unit 20 fluidly connected to the compressor unit 19.

Although the present invention has been described in accordance with preferred embodiments, it is obvious for the person skilled in the art that modifications are possible in all embodiments.

## Claims

1. A hydrogen production apparatus (11) for a wind turbine (2), comprising:
an electrolytic hydrogen production unit (18) for producing hydrogen gas (12) from electrical energy generated by the wind turbine (2),
a compressor unit (19) for compressing the produced hydrogen gas (12), and
a sensor unit (20) fluidly connected to the compressor unit (19) for detecting an oil contamination (H) of the compressed hydrogen gas (12).

2. The hydrogen production apparatus according to claim 1, wherein the hydrogen production apparatus (11) is configured for simultaneously compressing the produced hydrogen gas (12) by the compressor unit (19) and detecting an oil contamination (H) of the compressed hydrogen gas (12) by the sensor unit (20).

3. The hydrogen production apparatus according to claim 1 or 2, comprising a discharge unit (21) fluidly connected with the compressor unit (19) for discharging the compressed hydrogen gas (12), wherein a gas sampling point (S) of the sensor unit (20) is arranged between the compressor unit (19) and the discharge unit (21) with respect to a downstream direction (R) of the hydrogen gas (12).

4. The hydrogen production apparatus according to claim 3, comprising a connecting pipe (26) fluidly connecting the compressor unit (19) and the discharge unit (21), the connecting pipe (26) including a branching portion (27) for providing the sampling point (S) of the sensor unit (20).

5. The hydrogen production apparatus according to one of claims 1 - 4, wherein the compressor unit (19) comprises a positive displacement compressor, a piston compressor, a rotating compressor and/or a helical screw rotating compressor.

6. The hydrogen production apparatus according to one of claims 1 - 5, wherein the sensor unit (20) comprises a flame ionization detector, a gas chromatographer and/or a mass spectrometer.

7. The hydrogen production apparatus according to one of claims 1 - 6, wherein the sensor unit (20) is configured for detecting an oil contamination (H) of the compressed hydrogen gas (12) by measuring an amount (M) of oil (H), in particular an amount (M) of hydrocarbons (H), in the compressed hydrogen gas (12).

8. The hydrogen production apparatus according to one of claims 1 - 7, comprising a control unit (22) configured for detecting an oil contamination (H) of the compressed hydrogen gas (12) by comparing an amount (M) of oil (H) measured by the sensor unit (20) in the compressed hydrogen gas (12) with a predetermined threshold value (T).

9. The hydrogen production apparatus according to one of claims 1 - 8, comprising a control unit (22) configured for:
determining one or more characteristic parameters (N, Nₘᵢₙ, Nₘₐₓ, Nₘₑₐₙ) of a temporal development (30) of an amount (M) of oil (H) in the compressed hydrogen gas (12) measured over a predetermined time span (Δt), wherein the characteristic parameters (N) include a minimum value (Nₘᵢₙ), a maximum value (Nₘₐₓ), a mean value (Nₘₑₐₙ), a median value and/or a mode value, and
comparing one, some or all of the determined characteristic parameters (N, Nₘᵢₙ, Nₘₐₓ, Nₘₑₐₙ) with a predetermined threshold value (T).

10. The hydrogen production apparatus according to one of claims 1 - 9, comprising a control unit (22) for controlling a discharge of the compressed hydrogen gas (12) from the hydrogen production apparatus (11) depending on a detected oil contamination (H) of the compressed hydrogen gas (12) and/or a measured amount (M) of oil (H) in the compressed hydrogen gas (12).

11. The hydrogen production apparatus according to claim 10, wherein the control unit (22) is configured for controlling the hydrogen production unit (18), the compressor unit (19) and/or the discharge unit (21).

12. The hydrogen production apparatus according to one of claims 8 to 11, wherein the control unit (22) is configured for controlling a discharge of the compressed hydrogen gas (12) from the hydrogen production apparatus (11) such that the discharge is stopped when the amount (M) of oil (H) measured by the sensor unit (20) in the compressed hydrogen gas (12) is larger than the predetermined threshold value (T), and/or when one, some or all of the determined characteristic parameters (N, Nₘᵢₙ, Nₘₐₓ, Nₘₑₐₙ) is/are larger than the predetermined threshold value (T).

13. The hydrogen production apparatus according to one of claims 8 to 12, comprising an HMI unit (24), wherein the control unit (22) is configured to control the HMI unit (24) to output:
the measured amount (M) of oil (H) in the compressed hydrogen gas (12),
one, some or all of the determined characteristic parameters (N, Nₘᵢₙ, Nₘₐₓ, Nₘₑₐₙ), and/or
a warning message (32) when the amount (M) of oil (H) detected by the sensor unit (20) in the compressed hydrogen gas (12) is larger than the predetermined threshold value (T), and/or when one, some or all of the determined characteristic parameters (N, Nₘᵢₙ, Nₘₐₓ, Nₘₑₐₙ) is/are larger than the predetermined threshold value (T).

14. A wind turbine arrangement (1) comprising a wind turbine (2) and a hydrogen production apparatus (11) according to one of claims 1 - 13.

15. A method for operating a hydrogen production apparatus (11) for a wind turbine (2), comprising the steps:
a) producing (S1) hydrogen gas (12) by electrolysis from electrical energy generated by the wind turbine (2),
b) compressing (S2) the produced hydrogen gas (12) by a compressor unit (19), and
c) detecting (S3) an oil contamination (H) of the compressed hydrogen gas (12) by a sensor unit (20) fluidly connected to the compressor unit (19).
